# DEMANDE DE BREVET EUROPEEN

(11) **EP 1 619 126 A2**
(43) Date de publication de la demande: **25.01.2006**
(21) Numéro de dépôt: 05291537.8
(22) Date de dépôt: 19.07.2005
(51) Int. Cl.: B65B 25/06, B65B 43/52

(54) **Unité automatisée destinée à fermer des poches de coquillages**

(30) Priorité: 23.07.2004 FR 0451645
(71) Demandeur: Leroux, René, 50470 La Glacerie (FR)
(72) Inventeur: Leroux, René, 50470 La Glacerie (FR)
(74) Mandataire: Kohn, Philippe

(57) **Abrégé**

L'invention concerne une unité (10) automatisée destinée à fermer des bords supérieurs de poches (14) maillées destinées à contenir des coquillages tels que des huîtres, ladite unité (10) étant entièrement automatisée et comportant une partie amont (24) d'un convoyeur (25), destinée à déplacer longitudinalement les poches (14), un chariot de transfert (26), destiné à déplacer les poches (14) une par une jusqu'à un poste (16) de fermeture, et une partie aval (34) du convoyeur (25), qui est destinée à évacuer les poches (14).

## Description

L'invention concerne une unité automatisée destinée à fermer des bords supérieurs de poches maillées destinées à l'élevage de coquillages, notamment des poches maillées pouvant contenir des huîtres.

L'invention concerne plus particulièrement une unité automatisée destinée à fermer des bords supérieurs de poches maillées destinées à l'élevage de coquillages, du type qui comporte au moins un poste de fermeture du bord supérieur de chaque poche à l'aide d'un jonc.

Il est connu de l'état de la technique de proposer une telle unité semi-automatisée permettant à un opérateur d'effectuer dans un poste de fermeture l'insertion automatique d'un jonc tubulaire fendu sur toute sa longueur suivant un bord supérieur d'une poche à coquillages. La poche doit être manipulée par l'opérateur pour être amenée jusqu'au poste de fermeture. Durant l'opération de fermeture, les bords de la fente du jonc doivent s'écarter spontanément de part et d'autre du bord supérieur de la poche pour en assurer la fermeture. Or, aucun dispositif autre que la poche elle-même n'est prévu pour favoriser l'écartement des bords de la fente du jonc, et de ce fait cette unité semi-automatisée conduit à des résultats incertains, certaines poches ne pouvant être fermées correctement.

Par ailleurs, une telle unité ne permet pas d'utiliser un autre type de jonc que celui d'écrit, et notamment ne permet notamment pas d'utiliser un jonc filaire introduit entre des mailles du bord supérieur de la poche. Or ce type de jonc est très répandu dans le milieu de la conchyliculture, et notamment dans le milieu ostréicole.

Pour remédier à ces inconvénients, l'invention propose une unité du type décrit précédemment, qui permet de réaliser une fermeture efficace des poches à coquillages à l'aide de tout les types de jonc couramment utilisés en ostréiculture.

Dans ce but, l'invention propose une unité du type décrit précédemment, caractérisée en ce qu'elle comporte un châssis d'orientation longitudinale faisant face à un opérateur, qui comporte d'amont en aval :
- un poste de chargement, par lequel les poches maillées sont introduites transversalement,
- une partie amont d'un convoyeur s'étendant sensiblement suivant toute la longueur du châssis, qui est destinée à déplacer longitudinalement les poches,
- un chariot de transfert, destiné à déplacer les poches une par une jusqu'à un poste de fermeture comportant :
   - un dispositif de mise en position de la poche,
   - un dispositif d'immobilisation de la poche,
   - un dispositif d'enfilage du jonc,

le chariot de transfert étant destiné à évacuer longitudinalement lesdites poches fermées du poste de fermeture,
- une partie aval du convoyeur, destinée à évacuer longitudinalement les poches.

Selon d'autres caractéristiques de l'invention :
- le châssis comporte une surface de guidage des poches, comprise dans un plan transversal et inclinée vers l'arrière d'un angle déterminé réduit par rapport à la direction verticale et :
   - les parties amont et aval du convoyeur comportent chacune des rouleaux horizontaux agencés au pied de la surface de guidage et un moyen d'entraînement logé dans la surface de guidage,
   - le chariot de transfert est mobile sensiblement verticalement parallèlement à la surface de guidage,
   - le poste de fermeture est agencé dans une partie supérieure de la surface de guidage,
- le moyen d'entraînement du convoyeur est constitué d'un tapis roulant longitudinal muni d'aubes qui affleure dans la surface de guidage,
- le chariot mobile verticalement comporte une palette munie de rouleaux horizontaux qui est mobile entre une position basse située dans l'alignement des rouleaux du convoyeur et une position haute associée à la mise en position du bord supérieur d'une poche au niveau du poste de fermeture,
- le dispositif de mise en position de la poche comporte au moins :
   - un guide d'introduction de la poche,
   - un pion central mobile d'alignement des mailles, qui est destiné à être introduit transversalement dans un maille centrale du bord supérieur de la poche,
   - deux pions latéraux de stabilisation de la poche, mobiles longitudinalement et transversalement, qui sont destinés à être introduits transversalement dans des mailles d'extrémité du bord supérieur de la poche après que le pion central ait été introduit, pour stabiliser horizontalement le bord supérieur de la poche en se déplaçant longitudinalement avec les mailles d'extrémité du bord supérieur de la poche,
- le dispositif d'immobilisation de la poche comporte un mors fixe et au moins un mors opposé, mobile transversalement perpendiculairement à la surface de guidage, qui sont destinés à immobiliser les mailles de la poche pendant l'introduction du jonc,
- le pion central et les pions latéraux sont logés dans le dispositif d'immobilisation de la poche, ils sont interposés entre d'une part le mors fixe et d'autre part un mors central mobile et deux mors latéraux mobiles indépendants du mors central, et chaque pion porté par un mors est reçu transversalement au travers des mailles dans un perçage de réception d'un mors opposé,
- l'unité est destinée à l'enfilage longitudinal d'un jonc filaire dans une rangée déterminée de mailles alignées de la poche située verticalement sous au moins une rangée de mailles du bord supérieur de la poche et les mors fixe et mobiles sont munis de dents trapézoïdales complémentaires espacées transversalement d'une distance longitudinale correspondant à la distance longitudinale séparant trois mailles consécutives de la poche, et qui sont destinés, lorsqu'elles sont serrées, à déformer la poche de manière à aligner entre leurs flancs les mailles de la rangée déterminée,
- le dispositif d'enfilage du jonc filaire comporte :
   - à l'extrémité de chaque dent, une gouttière d'orientation longitudinale qui est destinée, lors du serrage transversal des mors, à former avec une paroi du mors opposé située entre deux de ses dents consécutives, un conduit d'un diamètre correspondant sensiblement au diamètre du jonc filaire de manière que l'ensemble des conduits alignés détermine un canal d'introduction du jonc filaire agencé verticalement au niveau de la série de mailles déterminée,
   - des moyens d'introduction du jonc filaire dans ledit canal d'introduction,
- l'unité est destinée à l'enfilage longitudinal à cheval sur le bord supérieur de la poche, d'un jonc tubulaire fendu et les mors fixe et mobiles sont destinés à pincer le bord supérieur de la poche pour permettre l'introduction du bord supérieur de la poche dans la fente du jonc,
- le dispositif d'enfilage du jonc tubulaire fendu comporte,
   - à l'extrémité de chaque mors, une gouttière d'orientation longitudinale qui est destinée, lors du serrage des mors, à former avec la gouttière du mors opposé un canal d'introduction du jonc fendu agencé verticalement au niveau du bord supérieur de la poche,
   - des moyens d'introduction du jonc tubulaire fendu dans ledit canal d'introduction,
- les moyens d'introduction du jonc comportent d'amont en aval:
   - une trémie vibrante d'alimentation en joncs,
   - une gouttière de réception, disposée sous la trémie,
   - deux paires de galets d'entraînement d'axe transversal, interposés entre la gouttière de réception et le canal, qui sont destinés à entraîner le jonc vers le canal d'introduction.
   - un vérin longitudinal d'enfilage, opposé aux galets, qui destiné à pousser une extrémité du jonc pour provoquer son entraînement par les galets.
   - un capteur de fin de course opposé aux galets par rapport au canal d'introduction,
- les moyens d'introduction du jonc comportent des moyens de mise en rotation du jonc tubulaire fendu autour d'un axe longitudinal dans la gouttière de réception et entre les galets, et un doigt vertical inférieur, interposé entre les galets d'entraînement et le canal de réception, qui est destiné à s'insérer dans la fente du jonc lors de la rotation du jonc de manière à tourner la fente du jonc vers le bord supérieur de la poche, puis à écarter les bords de la fente du jonc tubulaire fendu lors de son avancée pour permettre aux dits bords de glisser de part et d'autre du bord supérieur de la poche,
- l'unité est destinée à l'enfilage longitudinal d'un jonc filaire de diamètre élevé, et les galets sont fixes et agencés à proximité du canal des mors,
- l'unité est destinée à l'enfilage d'un jonc filaire de diamètre réduit et les galets sont solidaires d'une aiguille tubulaire d'un diamètre correspondant au diamètre extérieur du jonc et d'une longueur inférieure à celle du jonc, qui est susceptible d'être mue longitudinalement par un vérin à l'intérieur du canal pour favoriser la pénétration du jonc filaire de diamètre réduit dans les mailles,
- l'unité comporte un moyen de pinçage de la partie du jonc qui fait saillie hors de l'aiguille à l'opposé des galets, pour favoriser la rétractation de l'aiguille en maintenant le jonc filaire de diamètre réduit en place dans les mailles,
- le pion central mobile d'alignement des mailles est solidaire de l'extrémité d'une dent centrale du mors central mobile de manière à être mû par ledit mors central mobile,
- les deux pions latéraux de stabilisation sont montés sur des chariots montés coulissants longitudinalement par rapport aux mors latéraux mobiles,
- une pluralité de pions centraux d'alignement sont portés par une roue centrale d'axe vertical qui est décalée verticalement par rapport au mors fixe et dont l'axe blocable est mobile transversalement à l'encontre du mouvement du mors central et est relié à un codeur pour déterminer la position de pénétration d'un pion central d'alignement de ladite roue centrale dans la maille,
- une pluralité de pions latéraux de stabilisation sont portés par des roues folles d'axes verticaux qui sont décalées verticalement par rapport au mors fixe et dont les axes sont mobiles transversalement à l'encontre du mouvement du mors central,
- l'axe de la roue centrale et les axes des roues latérales sont liés à au moins un coulisseau, qui est rappelé élastiquement par un ressort à l'encontre du mouvement du mors central, qui est susceptible d'être déverrouillé pour provoquer l'avancée des roues porteuses des pions d'alignement et de stabilisation avant le serrage des mors, puis qui est susceptible d'être verrouillé après le serrage des mors pour recomprimer le ressort,
- l'unité comporte une unité électronique de commande qui est susceptible de recevoir des informations en provenance au moins de :
   - un premier capteur de détection de la position de chaque poche dans le chariot de transfert,
   - un deuxième capteur de fin de course de chaque poche dans le dispositif de mise en position de la poche,
   - un troisième capteur de course associé aux galets d'entraînement du jonc,

   pour commander :
   - un moteur d'entraînement du tapis roulant longitudinal du convoyeur,
   - un vérin hydraulique de levage du chariot de transfert,
   - un vérin d'actionnement du mors central mobile
   - au moins un vérin d'actionnement des mors latéraux mobiles,
   - le vérin longitudinal d'enfilage,
   - un moteur des galets d'entraînement,
- l'unité électronique de commande est susceptible de commander le vérin solidaire de l'aiguille puis les moyens de pincement du jonc filaire de diamètre réduit,
- l'unité électronique de commande est susceptible de commander le blocage de la roue porteuse des pions centraux en réponse aux informations fournies par le codeur de ladite roue.

L'invention concerne aussi un procédé de commande d'une unité électronique de commande du type précédemment, qui comporte une pluralité d'étapes parmi lesquelles successivement au moins :
- une étape de marche du convoyeur,
- une étape de levage du chariot de transfert,
- une étape d'arrêt du convoyeur,
- une étape d'actionnement du poste de fermeture,
- une étape de marche du convoyeur,
- une étape de descente du chariot de transfert.

En variante, l'invention concerne aussi un procédé de commande d'une unité électronique de commande du type précédemment, qui comporte une pluralité d'étapes parmi lesquelles successivement au moins :
- une étape de marche du convoyeur,
- une étape de levage du chariot de transfert,
- une étape d'arrêt du convoyeur,
- une étape d'actionnement du poste de fermeture,
- une étape de marche du convoyeur,
- une étape de descente du chariot de transfert.

D'autres caractéristiques et avantages de l'invention apparaîtront à la lecture de la description détaillée qui suit pour la compréhension de laquelle on se reportera aux dessins annexés dans lesquels :
- la figure 1 est une vue de face suivant une direction transversale d'une unité selon l'invention ;
- la figure 2 est une vue en élévation d'une unité selon l'invention ;
- la figure 3 est une vue de côté selon une direction longitudinale générale de l'unité de la figure 1 représentée dans une position de convoyage d'une poche ;
- la figure 4 est une vue de côté selon la direction longitudinale générale de l'unité représentée dans une position de fermeture de la poche par le poste de fermeture ;
- la figure 5 est une vue de détail de dessus d'un premier mode de réalisation d'un poste de fermeture de l'unité représenté dans une position d'introduction d'une poche ;
- la figure 6 est une vue de détail de dessus du premier mode de réalisation du poste de fermeture de l'unité représenté dans une position de mise en position de la poche ;
- la figure 7 est une vue de détail de dessus du premier mode de réalisation du poste de fermeture de l'unité représenté dans une position de fermeture de la poche ;
- la figure 8 est une vue une vue de côté, selon la direction longitudinale générale de l'unité, du premier mode de réalisation du poste de fermeture de l'unité représenté dans la position de convoyage de la poche ;
- la figure 9 est une vue une vue de côté, selon la direction longitudinale générale de l'unité, du premier mode de réalisation du poste de fermeture de l'unité représenté dans la position d'introduction de la poche ;
- la figure 10 est une vue de côté, selon la direction longitudinale générale de l'unité, du premier mode de réalisation du poste de fermeture de l'unité représenté dans la position de fermeture de la poche ;
- la figure 11 est une vue de détail de dessus d'un second mode de réalisation d'un poste de fermeture de l'unité représenté dans une position d'approche de la poche dans le poste de fermeture,
- la figure 12 est une vue de détail de dessus d'un second mode de réalisation d'un poste de fermeture de l'unité représenté dans une position d'introduction d'une poche ;
- la figure 13 est une vue de détail de dessus du second mode de réalisation du poste de fermeture de l'unité représenté dans une position de mise en position de la poche ;
- la figure 14 est une vue de détail de dessus du second mode de réalisation du poste de fermeture de l'unité représenté dans une position de fermeture de la poche ;
- la figure 15 est une vue une vue de côté, selon la direction longitudinale générale de l'unité, du second mode de réalisation du poste de fermeture de l'unité représenté dans la position d'introduction de la poche ;
- la figure 16 est une vue suivant la direction transversale d'un premier mode de réalisation des moyens d'introduction d'un jonc filaire de diamètre élevé ;
- la figure 17 est une vue schématique suivant la direction transversale d'un second mode de réalisation des moyens d'introduction d'un jonc filaire de diamètre réduit représenté dans une position de réception du jonc dans la trémie ;
- la figure 18 est une vue schématique du second mode de réalisation des moyens d'introduction d'un jonc filaire de diamètre réduit représenté dans une position d'introduction du jonc dans l'aiguille ;
- la figure 19 est une vue schématique du second mode de réalisation des moyens d'introduction d'un jonc filaire de diamètre réduit représenté dans une position d'introduction de l'aiguille dans les mailles de la poche,
- la figure 20 est une vue schématique du second mode de réalisation des moyens d'introduction d'un jonc filaire de diamètre réduit représenté dans une position de retrait de l'aiguille.
- la figure 21 est une vue schématique du troisième mode de réalisation des moyens d'introduction d'un jonc tubulaire.

Dans la description qui va suivre, des chiffres de référence identiques désignent des pièces identiques ou ayant des fonctions similaires.

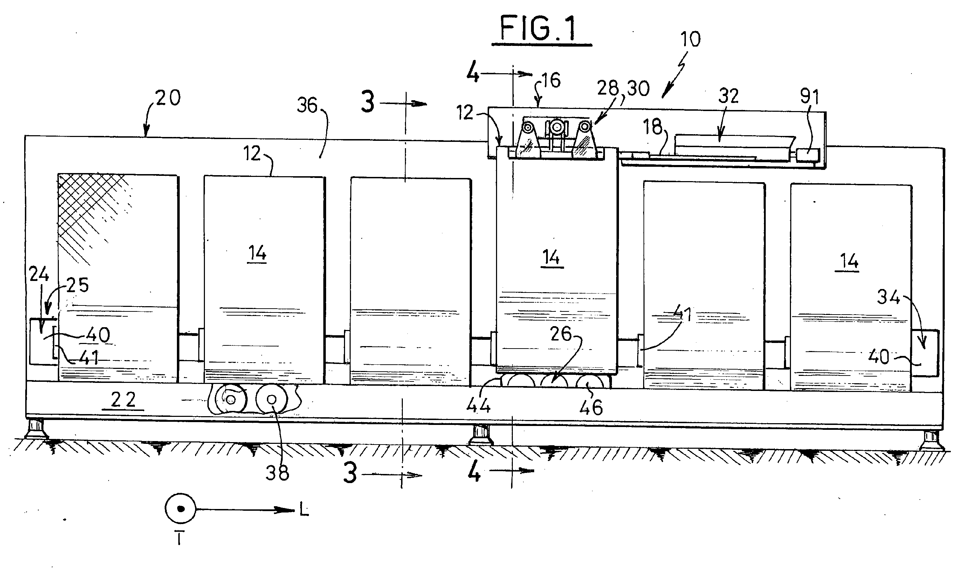

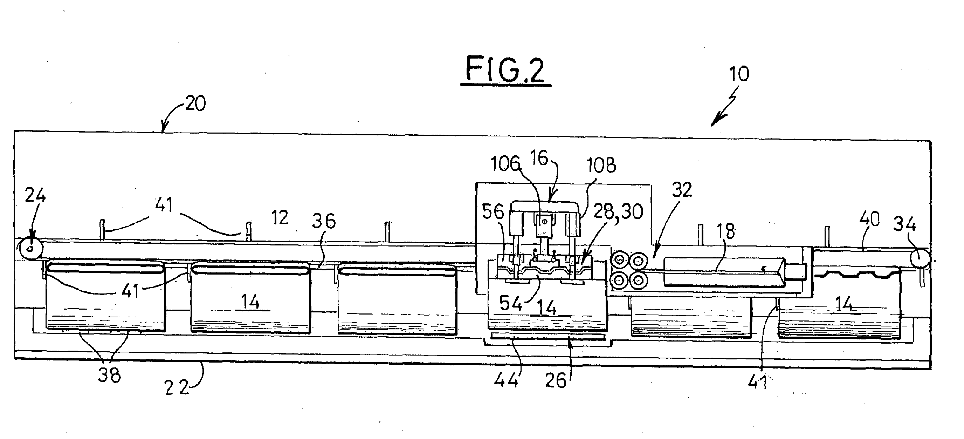

On a représenté sur les figures 1 et 2 l'ensemble d'une unité 10 automatisée destinée à fermer des bord supérieurs 12 de poches maillées 14 destinées à contenir des coquillages (non représentés) tels que par exemple des huîtres.

De manière connue, une telle unité 10 comporte au moins un poste 16 permettant d'effectuer la fermeture du bord supérieur 12 des poches 14 à l'aide d'un jonc 18.

Les unités 10 conventionnelles de ce type comportent généralement un poste 16 de fermeture qui est actionné par un opérateur. L'opérateur en charge de la fermeture des poches 14 doit porter chaque poche 14 jusqu'au poste 16 de fermeture puis, tout en maintenant la poche 14, il doit manoeuvrer le poste de fermeture, ce qui rend l'opération particulièrement malaisée.

Puis l'opérateur, doit encore décharger manuellement chaque poche 14.

Pour remédier à cet inconvénient, l'invention propose une unité 10 du type décrit précédemment, dans laquelle le convoyage des poches 14 jusqu'au poste 16 de fermeture, la fermeture des poches 14, et leur évacuation sont entièrement automatisées.

Dans ce but, conformément à l'invention, et comme l'illustre notamment la figure 2, l'unité 10 comporte un châssis 20 d'orientation longitudinale "L" faisant face à un opérateur, qui comporte d'amont en aval :
- un poste 22 de chargement, par lequel les poches maillées 14 sont introduites transversalement suivant une direction "T",
- une partie amont 24 d'un convoyeur 25 suivant toute la longueur du châssis 20, qui est destinée à déplacer longitudinalement les poches 14,
- un chariot 26 de transfert, destiné à déplacer les poches 14 une par une jusqu'à un poste 16 de fermeture, qui sera décrit ultérieurement, et qui comporte :
   - un dispositif 28 de mise en position de la poche 14,
   - un dispositif 30 d'immobilisation de la poche 14,
   - un dispositif 32 d'enfilage du jonc 18,

le chariot de transfert 26 étant destiné à évacuer longitudinalement lesdites poches 14 fermées du poste 16 de fermeture,
- une partie aval 34 du convoyeur 25, destinée à évacuer longitudinalement les poches 14.

Plus particulièrement, comme l'illustrent les figures 1 à 4, le châssis 20 comporte une surface 36 de guidage des poches 14, comprise dans un plan longitudinal et incliné vers l'arrière d'un angle "α" déterminé par rapport à la verticale. D'une manière générale, le convoyeur 25 est agencé dans cette surface 36 de guidage.

Les parties amont 24 et aval 34 du convoyeur 25 comportent chacune des rouleaux horizontaux 38 qui sont agencés au pied de la surface 36 de guidage et elles comportent un moyen d'entraînement 40 commun qui est logé dans la surface 36 de guidage.

Cette configuration n'est pas limitative de l'invention, et tout autre moyen connu de l'état de la technique permettant de faire glisser les poches 14 peut être retenu pour la bonne réalisation de l'invention.

Par ailleurs, le chariot 26 de transfert est mobile sensiblement verticalement parallèlement à la surface 36 de guidage pour permettre le transfert des poches 14 jusqu'au poste 16 de fermeture qui est agencé dans une partie supérieure de la surface 36 de guidage.

Dans le mode de réalisation préféré de l'invention, le moyen d'entraînement 40 du convoyeur 25 est constitué d'un tapis roulant longitudinal qui affleure dans la surface 36 de guidage. Chaque tapis comporte des aubes 41 entre lesquelles sont reçues les poches 14 pour assurer leur entraînement.

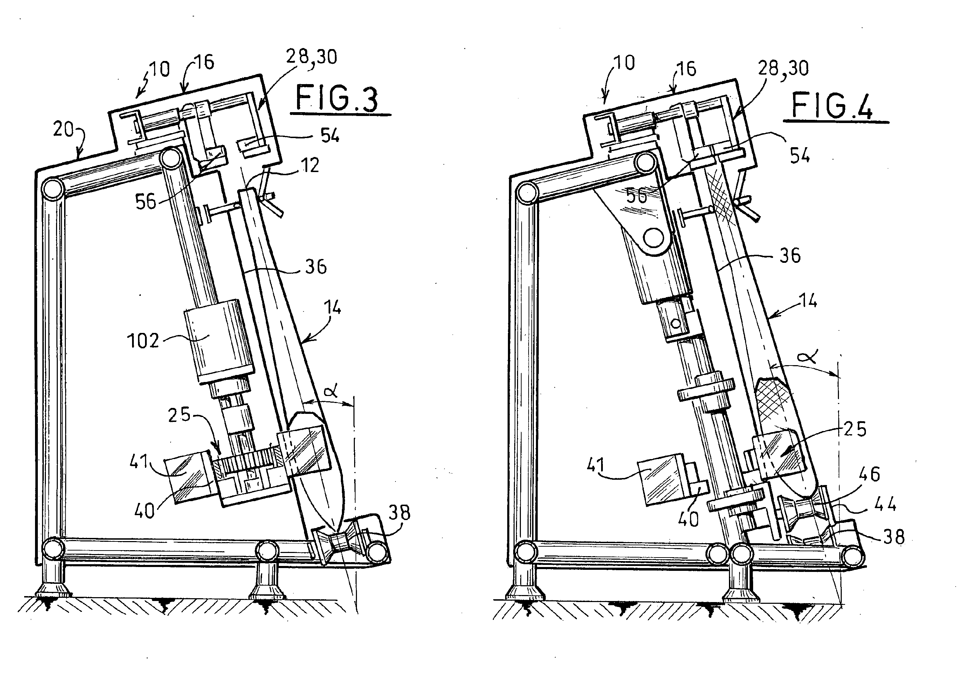

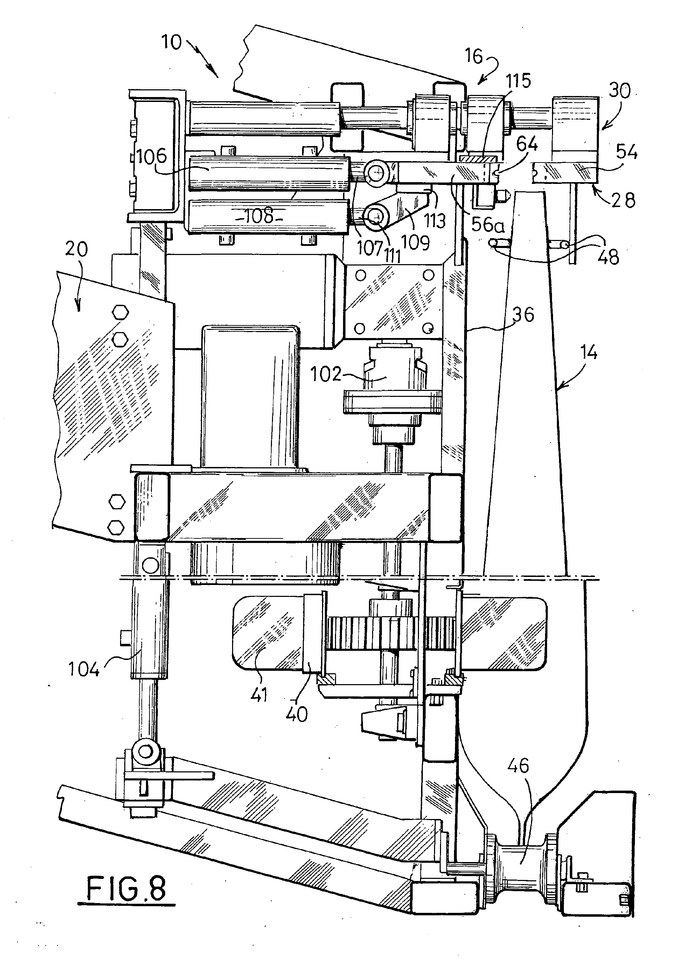

Avantageusement, le chariot 26 mobile verticalement comporte une palette 44 qui est munie elle aussi de rouleaux horizontaux 46. La palette 44 est mobile entre une position basse, représentée aux figures 3 et 8, située dans l'alignement des rouleaux 38 du convoyeur 25 et une position haute, représentée aux figures 4, 9 et 10 qui est associée à la mise en position du bord supérieur 12 d'une poche 14 au niveau du poste 16 de fermeture.

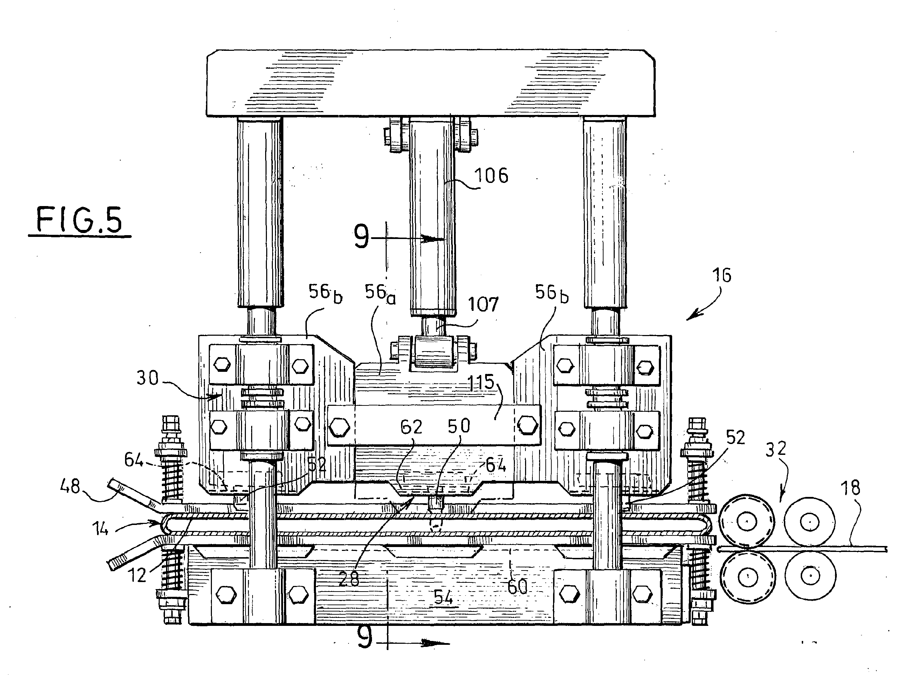

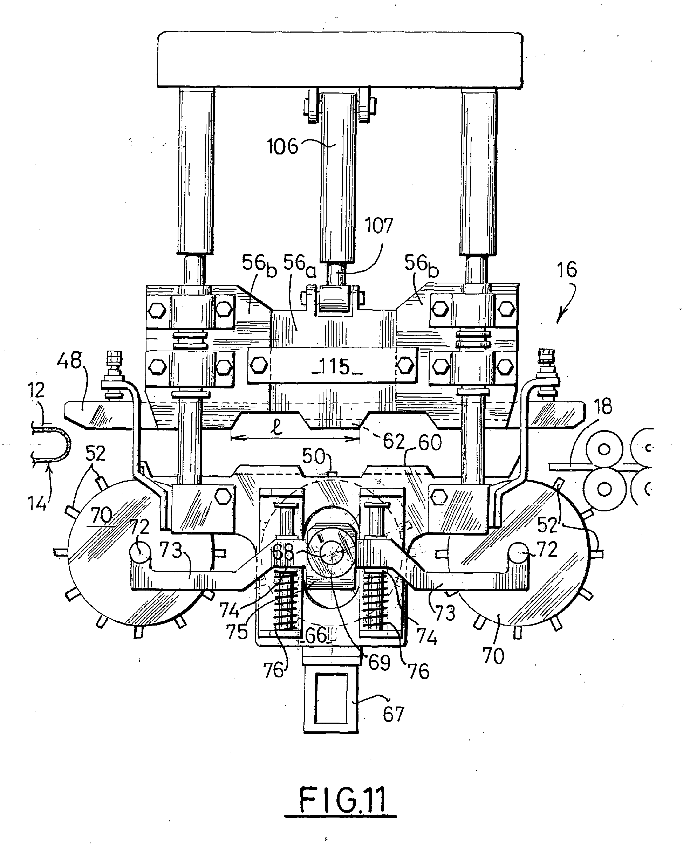

Le détail de la réalisation du poste de fermeture a été représenté aux figures 5 à 15. Plus particulièrement, un premier mode de réalisation du poste de fermeture a été représenté aux figures 5 à 10 et un second mode de réalisation du poste de fermeture a été représenté aux figures 11 à 15.

Quelque soit le mode de réalisation du poste 16 de fermeture envisagé, le dispositif 16 de mise en position de la poche comporte au moins :
- un guide 48 d'introduction de la poche,
- un pion central 50 mobile d'alignement des mailles, qui est destiné à être introduit transversalement dans un maille centrale du bord supérieur 12 de la poche 14,
- deux pions latéraux 52 de stabilisation de la poche, mobiles longitudinalement et transversalement, qui sont destinés à être introduits transversalement dans des mailles d'extrémité du bord supérieur 12 de la poche 14 après que le pion central 50 ait été introduit, pour stabiliser horizontalement le bord supérieur 12 de la poche 20 en se déplaçant longitudinalement avec les mailles d'extrémité du bord supérieur 12 de la poche 14.

Dans tous les modes de réalisation du poste 16 de fermeture, le dispositif 30 d'immobilisation de la poche 14 comporte un mors fixe 54 et au moins un mors 56 opposé, mobile transversalement perpendiculairement à la surface 36 de guidage, qui sont destinés à immobiliser les mailles de la poche 14 pendant l'introduction du jonc 18.

Avantageusement, le pion central 50 et les pions latéraux 52 sont logés dans le dispositif 30 d'immobilisation de la poche.

Comme l'illustrent les figures 5 à 15, d'une part, le pion central 50 est interposé entre le mors fixe 54 et d'autre part un mors central 56a mobile, et d'autre part les pions latéraux 52 sont interposés entre le mors fixe 54 et deux mors latéraux 56b mobiles indépendants du mors central 56a. Chaque pion 50 ou 52 est porté par un mors fixe 54 ou un mors mobile 56a, 56b associé et est reçu transversalement au travers des mailles dans un perçage (non représenté) de réception du mors mobile 56a, 56b ou du mors fixe 54 opposé.

De préférence, l'unité 10 est destinée à réaliser l'enfilage longitudinal d'un jonc 18 filaire dans une rangée déterminée de mailles alignées de la poche 14 qui est située verticalement sous au moins une rangée de mailles du bord supérieur 12 de la poche 14.

Lorsque la poche 14 occupe une position hors du poste 16 de fermeture, les mailles de la poche 14 sont globalement coplanaires pour chacun des côtés de la poche 14, de sorte qu'il est impossible d'y insérer manuellement un jonc 18, si ce n'est en le déformant très fortement de manière à le faire pénétrer dans les mailles, maille après maille.

L'invention permet au contraire de déformer la poche 14 en lu conférant une forme ondulée de manière que le jonc 18, rectiligne, puisse y être inséré automatiquement.

A cet effet, comme l'illustrent les figures 5 à 6 et 11 à 14, les mors fixe 54 et mobiles 56a, 56b sont munis de dents trapézoïdales 60, 62 complémentaires espacées transversalement d'une distance "I" longitudinale, représentée à la figure 11, correspondant à la distance longitudinale séparant trois mailles consécutives de la poche 14. Les mors 54, 56a et 56b sont donc destinés, lorsqu'elles sont serrées, à déformer la poche 14 de manière à aligner entre leurs flancs les mailles de la rangée déterminée.

Plus particulièrement, comme l'illustre les figures 5 et 8, quel que soit le mode de réalisation du poste 16 de fermeture, le dispositif 32 d'enfilage du jonc filaire 18 comporte à l'extrémité de chaque dent 62, une gouttière 64 d'orientation longitudinale qui est destinée comme l'illustrent la figure 7, lors du serrage transversal des mors 56a, 56b, à former avec une paroi du mors 54 opposé située entre deux de ses dents 60 consécutives, un conduit d'un diamètre correspondant sensiblement au diamètre du jonc filaire 18 de manière que l'ensemble des conduits alignés détermine un canal 65 d'introduction du jonc filaire 18 agencé verticalement au niveau de la série de mailles déterminée.

Le dispositif 32 d'enfilage du jonc filaire 18 comporte aussi des moyens 62 d'introduction du jonc filaire 18 dans ledit canal d'introduction, qui seront décrits plus en détail dans la suite de la présente description.

Dans le premier mode de réalisation du poste 16 de fermeture qui a été représenté aux figures 5 à 8, le pion central 50 mobile d'alignement des mailles est solidaire de l'extrémité d'une dent centrale 62 du mors central 56a mobile de manière à être mû par ledit mors 56a central mobile. Les deux pions 52 latéraux de stabilisation sont montés sur des chariots 64 montés coulissants longitudinalement par rapport aux mors 56b latéraux mobiles. Le détail du coulissement des chariots 64 n'a pas été représenté.

Dans le second mode de réalisation du poste 16 de fermeture qui a été représenté aux figures 11 à 17, le poste 16 de fermeture comporte :
- une pluralité de pions 50 centraux d'alignement qui sont portés par une roue centrale 66 d'axe vertical qui est décalée verticalement par rapport au mors fixe 54 et dont l'axe 68 blocable est mobile transversalement à l'encontre du mouvement du mors central mobile 56a et est relié à un codeur 69 pour déterminer la position de pénétration d'un pion central 50 d'alignement de ladite roue centrale 66 dans la maille,
- une pluralité de pions latéraux 52 de stabilisation qui sont portés par des roues folles 70 d'axes 72 verticaux qui sont décalées verticalement par rapport au mors fixe 54 et dont les axes 72 sont mobiles transversalement à l'encontre du mouvement du mors central mobile 56a.

Plus particulièrement, comme l'illustrent les figures 11 à 14, l'axe 68 de la roue centrale 66 et les axes 72 des roues latérales 70 sont liés à au moins un coulisseau 74, qui est rappelé élastiquement par un ressort 76 à l'encontre du mouvement du mors central 54.

De préférence, comme l'illustre la figure 11, les axes 72 des roues latérales 70 sont portés par des bras 73 qui sont fixés à deux coulisseaux symétriques 74 montés chacun sur un ressort associé 76. Une platine 75 solidaire de ces deux bras 73 et agencée entre les bras 73 porte l'axe 68 de la roue centrale 66 et le codeur 69.

Les coulisseaux 74 sont susceptible d'être déverrouillés, par exemple par une butée escamotable électriquement (non représentée) pour provoquer l'avancée des roues 66, 70 porteuses des pions d'alignement 50 et de stabilisation 52 avant le serrage des mors 56a, 56b. Les coulisseaux 74 sont susceptibles d'être verrouillés après le serrage des mors 56a, 56b pour recomprimer les ressorts 76.

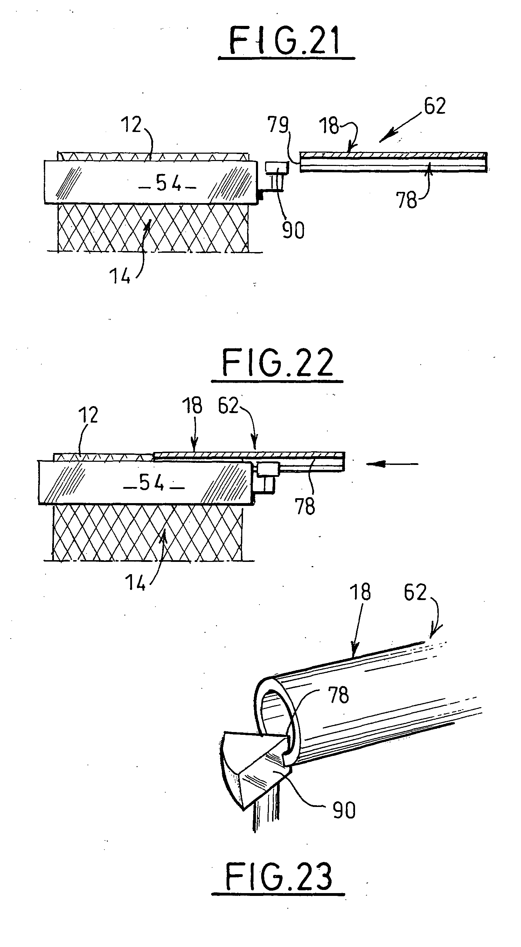

En variante de l'invention, comme l'illustrent les figures 21 à 23, l'unité 10 peut aussi être destinée à l'enfilage longitudinal, à cheval sur le bord supérieur 12 de la poche 14, d'un jonc 18 tubulaire fendu. Dans ce cas, les mors fixe 54 et mobiles 56a, 56b ne comportent pas de dents du type des dents 62 décrites précédemment et ils sont simplement destinés à pincer le bord supérieur 12 de la poche 14 pour permettre l'introduction du bord supérieur 12 de la poche 14 dans la fente 78 du jonc 18 en faisant glisser ledit jonc 18 sur le bord supérieur 12 de la poche 14.

Dans cette configuration, le dispositif d'enfilage 32 du jonc tubulaire 18 fendu comporte à l'extrémité de chaque mors 54, 56a, 56b, une gouttière d'orientation longitudinale qui est destinée, lors du serrage des mors 56a, 56b, à former avec la gouttière du mors opposé 54 un canal d'introduction du jonc 18 fendu agencé verticalement au niveau du bord supérieur 12 de la poche 14.

Il sera compris que le dispositif d'enfilage 32 du jonc tubulaire 18 fendu comporte aussi des moyens 62 d'introduction spécifiques du jonc 18 tubulaire fendu dans ledit canal d'introduction, qui seront décrits plus en détail dans la suite de la présente description.

D'une manière générale, quel que soit le mode de réalisation considéré, les moyens 62 d'introduction du jonc 18 comportent d'amont en aval:
- une trémie 84 vibrante d'alimentation en joncs 18,
- une gouttière 86 de réception, disposée sous la trémie 84,
- deux paires de galets 88 d'entraînement d'axe transversal, tournants en continu, interposés entre la gouttière 86 de réception et le canal, qui sont destinés à entraîner le jonc 18 vers le canal d'introduction,
- un vérin 91 longitudinal d'enfilage, opposé aux galets 88 par rapport à la gouttière 86, qui destiné à pousser une extrémité 92 du jonc 18 pour provoquer son entraînement par les galets 18, et
- un capteur (non représenté) de fin de course qui est opposé aux galets 88 par rapport au canal 65 d'introduction des mors 54, 56a, 56b, et qui est destiné à détecter la fin de l'enfilage du jonc 18 dans les mailles de la poche 14.

Cette configuration trouve notamment à s'appliquer telle quelle dans le cas de moyens 62 d'introduction associés à un jonc 18 filaire de diamètre élevé, comme représenté aux figures 5 à 7 et 11 à 14. Dans ce cas, les galets 88 sont fixes et agencés à proximité du canal des mors 54, 56a, 56b.

Dans le cas plus spécifique selon lequel ces moyens 62 d'introduction sont associés à un jonc 18 tubulaire fendu, comme représenté schématiquement aux figures 21 à 23, les moyens d'introduction 62 du jonc comportent des moyens (non représentés) de mise en rotation du jonc 18 tubulaire fendu autour d'un axe longitudinal dans la gouttière 86 de réception et entre les galets 88. La rotation a été représentée par une flèche à la figure 21. Ces moyens de mise en rotation sont associés à doigt vertical 90 inférieur, représenté aux figures 21 à 23 interposé entre les galets 88 d'entraînement et le canal de réception (non représenté), qui est destiné à s'insérer dans la fente 78 du jonc 18 lors de la rotation du jonc de manière à tourner la fente du jonc 18 vers le bord supérieur 12 de la poche 14, puis à écarter les bords 79 de la fente 78 du jonc 18 tubulaire fendu lors de son avancée, représentée à la figure 22, pour permettre aux dits bords de glisser de part et d'autre du bord supérieur 12 de la poche 14. Le jonc 18 étant réalisé en un matériau élastique, les bords de sa fente 78 se referment d'eux-mêmes sur le bord supérieur 12 de la poche 14.

Dans le cas selon lequel ces moyens 62 d'introduction sont associés à un jonc 18 tubulaire filaire de diamètre réduit, il est nécessaire d'accompagner le jonc 18 dans les mors 54, 56a, 56b, car il est très flexible.

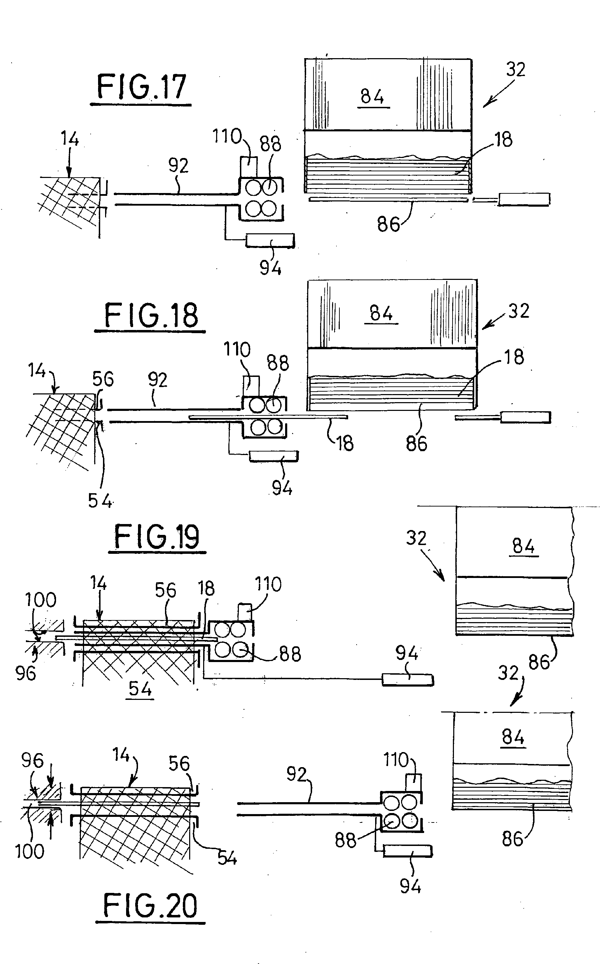

Dans cette configuration, comme l'illustrent les figures 17 à 20, les galets 88 sont solidaires d'une aiguille tubulaire 92 qui est d'un diamètre intérieur correspondant au diamètre extérieur du jonc 18, et qui est d'une longueur inférieure à celle du jonc 18.

Cette aiguille tubulaire 92 est montée coulissante longitudinalement par rapport au châssis 20, et elle est susceptible d'être mue longitudinalement par un vérin 94 à l'intérieur du canal pour favoriser la pénétration du jonc 18 filaire de diamètre réduit dans les mailles.

Pour immobiliser le jonc 18 une fois qu'il a été inséré entre les mailles de la poche 14, l'unité 10 comporte un moyen 96 de pinçage de la partie 98 du jonc 18 qui fait saillie hors de l'aiguille 92 à l'opposé des galets 88. Ce moyen de pinçage 96 permet de favoriser la rétractation de l'aiguille 92 en maintenant le jonc filaire 18 de diamètre réduit en place dans les mailles. Ce moyen de pinçage 96 peut par exemple être constitué par une pince dont les mors 100 sont commandés électriquement.

Avantageusement, l'unité 10 comporte une unité électronique de commande (non représentée) qui est susceptible de recevoir des informations en provenance au moins de :
- un premier capteur (non représenté) de détection de la position de chaque poche dans le chariot 26 de transfert,
- un deuxième capteur (non représenté) de fin de course de chaque poche 14 dans le dispositif de mise en position de la poche 14,
- un troisième capteur (non représenté) de course associé aux galets 88 d'entraînement du jonc 18,

pour commander :
- un moteur 102 d'entraînement du tapis roulant longitudinal du convoyeur 25,
- un vérin 104 hydraulique de levage du chariot 26 de transfert,
- un vérin 106 d'actionnement du mors 56a central mobile,
- au moins un vérin 108 d'actionnement des mors 56b latéraux mobiles,
- le vérin 91 longitudinal d'enfilage, et
- un moteur 110 des galets 88 d'entraînement.

Dans tous les modes de réalisation de l'invention, comme l'illustrent les figures 5 à 15, l'unité 10 comporte de préférence un vérin 106 supérieur d'actionnement du mors 56a central mobile et deux vérins 108 d'actionnement des mors 56b latéraux mobiles.

Le mors central 56a est fixé dans le prolongement de la tige 107 du vérin 106 supérieur. Les mors latéraux 56b sont chacun fixés à une équerre 109 qui est fixée à l'extrémité de la tige 111 de chaque vérin 108. Chaque équerre 109 comporte une surface 113 de guidage en saillie horizontale, tournée vers l'autre équerre 109, qui reçoit la face inférieure du mors central 56a. Par ailleurs, les deux mors latéraux 56b sont réunis par une plaque de liaison 115 sous laquelle glisse le mors 56a central. De la sorte, le mors central 56a est guidé en coulissement entre les surfaces de guidage 113 et la plaque de liaison 115.

Par ailleurs, dans le mode de réalisation associé à l'introduction d'un jonc 18 de diamètre réduit, l'unité électronique de commande est susceptible de commander aussi le vérin 94 solidaire de l'aiguille 92 puis les moyens 96 de pincement du jonc 18 filaire de diamètre réduit.

L'unité électronique de commande est susceptible de commander le blocage de la roue 66 porteuse des pions 50 centraux en réponse aux informations fournies par le codeur 69 de ladite roue.

Cette unité de commande est susceptible de commander l'acheminement des poches 14 au travers de l'unité 10 selon deux procédés différents.

D'une manière générale, un premier procédé comporte au moins, successivement :
- une étape de marche du convoyeur 25,
- une étape d'arrêt du convoyeur 25,
- une étape de levage du chariot 26 de transfert,
- une étape d'actionnement du poste 16 de fermeture,
- une étape de descente du chariot 26 de transfert,
- une étape de marche du convoyeur 25.

De ce fait, dans le détail, le déroulement de la fermeture d'une poche 14 selon le premier procédé se déroule comme suit.

L'unité 10 étant en fonctionnement sous le contrôle de l'unité de commande, un opérateur place transversalement des poches 14 au niveau du poste de chargement au fur et à mesure de l'avancée du convoyeur 25.

La partie amont 24 du convoyeur 25 achemine les poches vers le chariot 26 de transfert. Lorsque que le premier capteur détecte la présence d'une poche 14 dans le chariot 26 de transfert, l'unité de commande pilote l'arrêt du convoyeur 25.

L'unité de commande déclenche alors l'élévation du chariot 26 de transfert vers le poste 16 de fermeture. La poche 14 pénètre verticalement par le dessous du poste 16 de fermeture.

Lorsque le deuxième capteur détecte la fin de course de la poche dans le dispositif de mise en position du poste 16 de fermeture, l'unité de commande déclenche alors la fermeture de la poche 14 par le poste 16 de fermeture. Cette fermeture pouvant être opérée de différentes façons en fonction du mode de réalisation choisi du poste de fermeture, elle sera décrite ultérieurement dans la suite de la présente description.

Puis, l'unité de commande pilote la descente de la poche 14 par le chariot 26 de transfert. L'unité de commande pilote alors le transfert de la poche 14 du chariot de transfert 26 à la partie aval du convoyeur 25, lequel est alors remis en marche. La poche 14 est acheminée jusqu'en bout de l'unité 10 où elle peut être déchargée, ou encore transférée vers un autre convoyeur (non représenté) qui ne fait pas l'objet de la présente invention.

Un second procédé en variante comporte au moins, successivement :
- une étape de marche du convoyeur 25,
- une étape de levage du chariot 26 de transfert,
- une étape d'arrêt du convoyeur 25,
- une étape d'actionnement du poste 16 de fermeture,
- une étape de marche du convoyeur 25,
- une étape de descente du chariot 26 de transfert.

De ce fait, dans cette variante, le déroulement de la fermeture d'une poche 14 se déroule comme suit.

L'unité 10 étant en fonctionnement sous le contrôle de l'unité de commande, un opérateur place transversalement des poches 14 au niveau du poste de chargement au fur et à mesure de l'avancée du convoyeur 25.

La partie amont 24 du convoyeur 25 achemine les poches vers le chariot 26 de transfert. Lorsque que le premier capteur détecte que la poche 14 occupe une position d'engagement déterminée dans le chariot 26 de transfert, c'est à dire une position correspondant à une longueur engagée suffisante pour que le chariot 26 la supporte, l'unité de commande déclenche alors l'élévation du chariot 26 de transfert vers le poste 16 de fermeture alors que le convoyeur 25 poursuit son mouvement pour faire avancer la poche 14. La poche 14 pénètre obliquement par le dessous du poste 16 de fermeture et en avançant.

Lorsque le deuxième capteur détecte la fin de course de la poche 14 dans le dispositif de mise en position du poste 16 de fermeture, l'unité de commande déclenche alors l'arrêt du convoyeur 25 puis la fermeture de la poche 14 par le poste 16 de fermeture. Cette fermeture pouvant être opérée de différentes façons en fonction du mode de réalisation choisi du poste de fermeture, elle sera décrite ultérieurement dans la suite de la présente description.

Puis, l'unité de commande pilote alors la remise en marche du convoyeur 25 et la descente de la poche 14 par le chariot 26 de transfert. La poche 14 est alors évacuée obliquement du poste 16 de fermeture. L'unité de commande pilote alors le transfert de la poche 14 du chariot de transfert 26 à la partie aval 34 du convoyeur 25 qui est alors mis en marche. Lorsque la poche 14 fait suffisamment saillie hors du chariot de transfert 26, le chariot de transfert 26 est arrêté, la poche 14 est transférée du chariot de transfert 26 à la partie aval 34 du convoyeur 25, qui l'achemine jusqu'en bout de l'unité 10 où elle peut être déchargée, ou encore transférée vers un autre convoyeur (non représenté) qui ne fait pas l'objet de la présente invention.

La fermeture de la poche 14 dans les différents modes de réalisation du poste 16 de fermeture va à présent être décrite.

Le premier mode de réalisation du poste 16 de fermeture qui a été représenté aux figures 5 à 10 est associé de préférence au premier procédé de fonctionnement l'unité de commande.

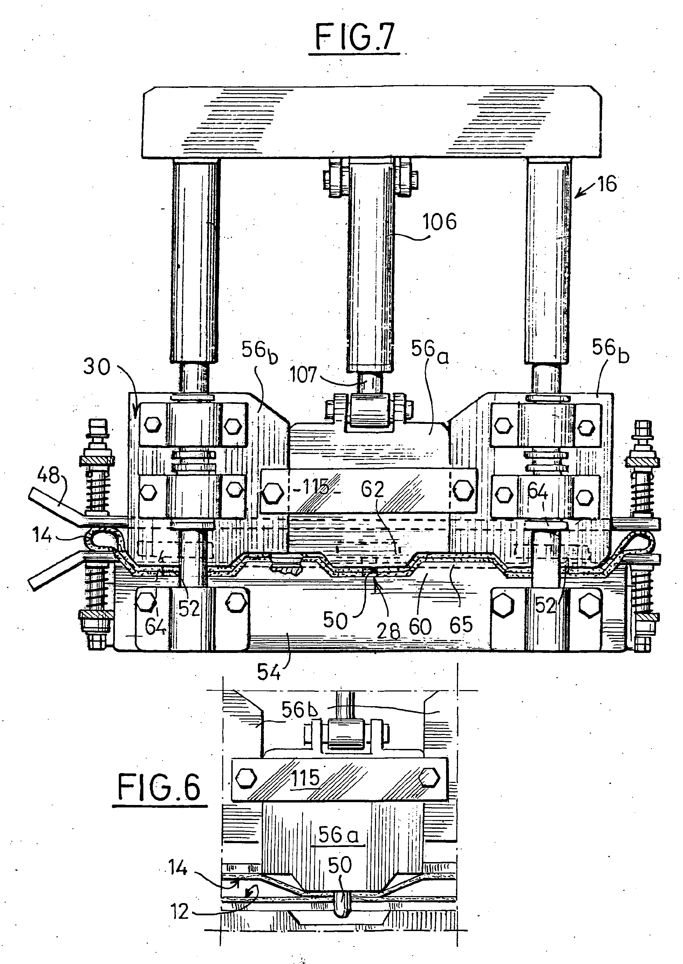

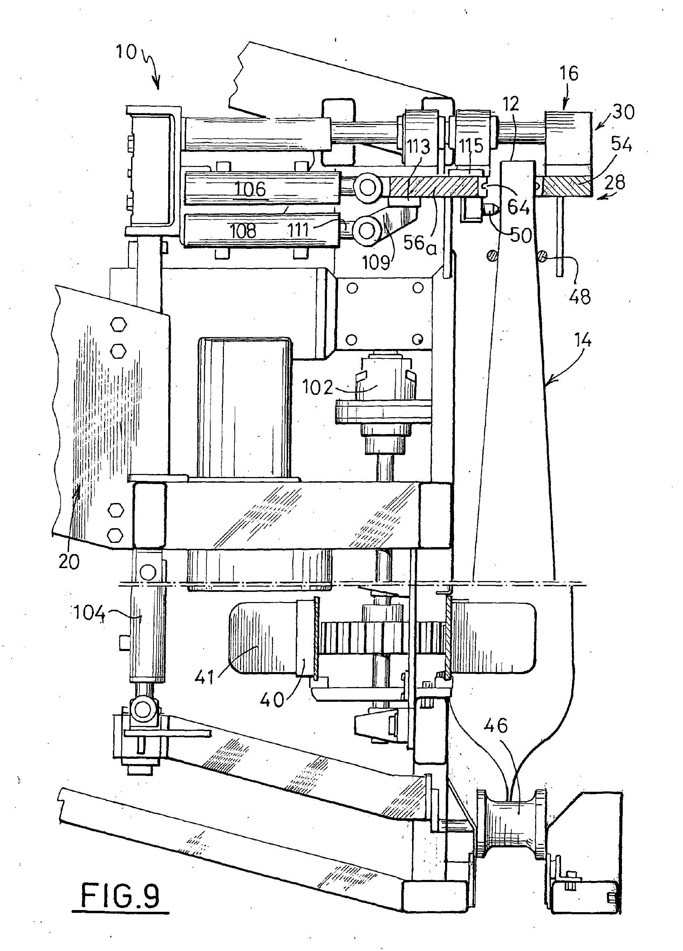

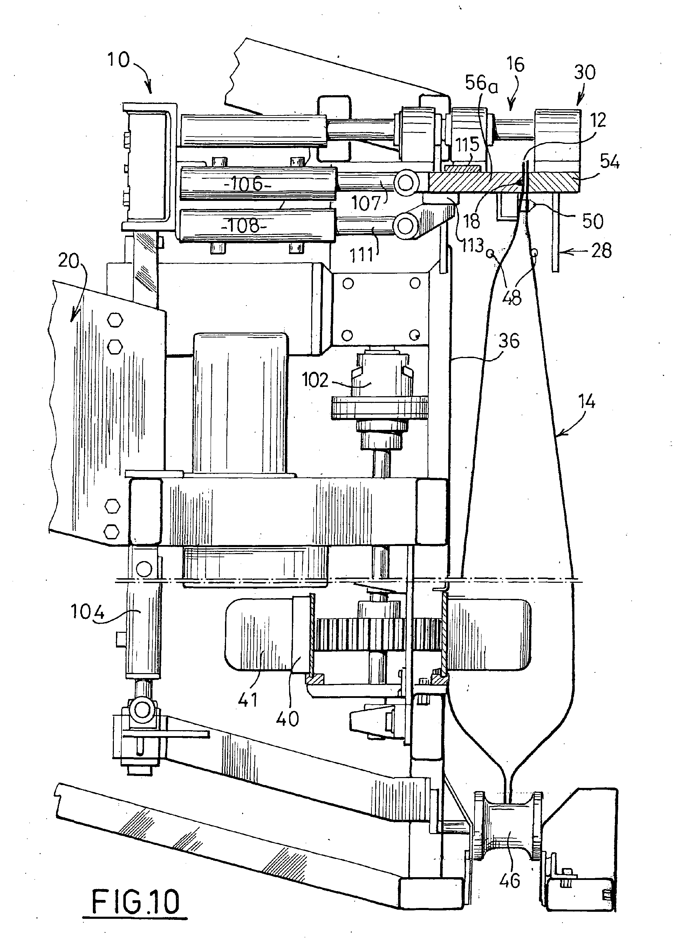

Initialement, la poche 14 occupe une position basse comme représentée à la figure 8. Puis, le chariot 26 de transfert élève la poche 14 dans la position de la figure 9 de manière qu'elle pénètre dans le guide d'introduction 48, comme représenté à la figure 5. L'unité de commande déclenche alors l'avancée du vérin central 106, de manière que le mors central 56a avance contre le mors fixe 54 et que le pion central 50 pénètre dans une maille sensiblement central de la poche 14, comme représenté à la figure 6. Puis L'unité de commande déclenche l'avancée des vérins latéraux 108 de manière que les pions latéraux centraux 50 montés sur les chariots mobiles 64 pénètrent dans des mailles de la poche 14 et réalisent la stabilisation de la poche 14. Puis tous les mors 56a, 56b sont serrés par les vérins 106, 108 pour déformer les mailles de la poche, comme représenté aux figures 7 et 10, et le jonc 18 est alors enfilé, selon sa forme, soit entre les mailles dans le canal d'introduction 65, soit sur le bord supérieur 12 de la poche 14. Les mors 56a, 56b sont alors relâchés par relâchement des vérins 106, 108 et la poche 14 est alors évacuée par le chariot 26 de transfert.

Le second mode de réalisation du poste 16 de fermeture qui a été représenté aux figures 11 à 15 est associé de préférence au second procédé de fonctionnement de l'unité de commande.

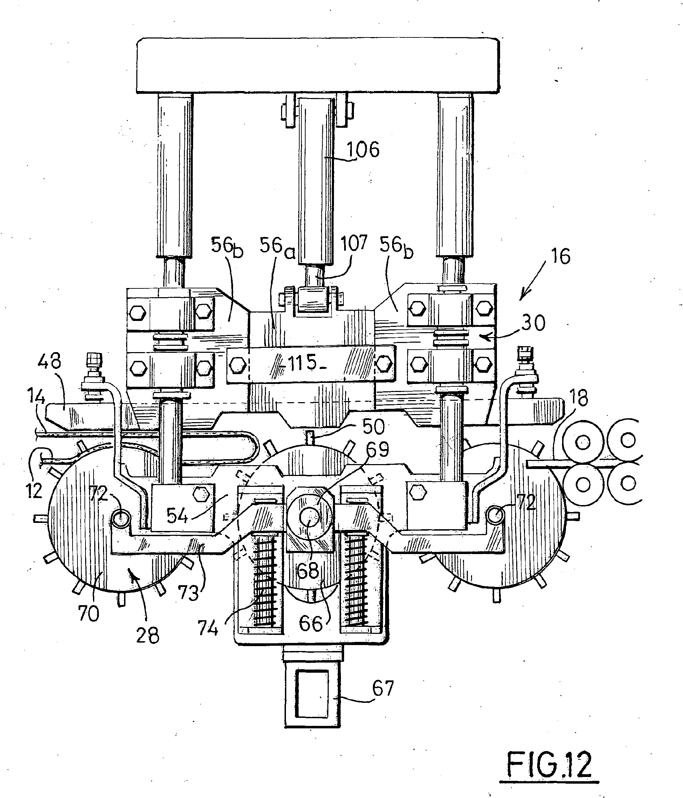

Initialement, la poche 14 occupe une position basse analogue à celle représentée à la figure 8 en référence au procédé de fonctionnement précédent. Puis, le chariot 26 de transfert élève la poche 14 tandis que le convoyeur 25 continue d'avancer, comme représenté à la figure 11 de manière que la poche 14 pénètre latéralement dans le guide d'introduction 48, et que ses mailles engrènent avec les pions latéraux 52 de la roue latérale 70, comme représenté à la figure 12.

L'avancée de la poche 14 se poursuit jusqu'à ce que le premier capteur (non représenté) de détection de la position de chaque poche 14 dans le chariot 26 de transfert détecte une avancée de la poche suffisante dans les mors 54, 56a, 56b. Cet avancée est de l'ordre de 250mm.

A cet instant, l'unité de commande déclenche le relâchement de la butée escamotable électriquement, de manière à provoquer le rappel élastique des coulisseaux 74 par le ressort 76, ce qui provoque l'avancée des roues latérales 70 et de la roue centrale 66. La poche 14 continue d'avancer et les pions 50 et 52 engrènent avec les mailles de la poche 14.

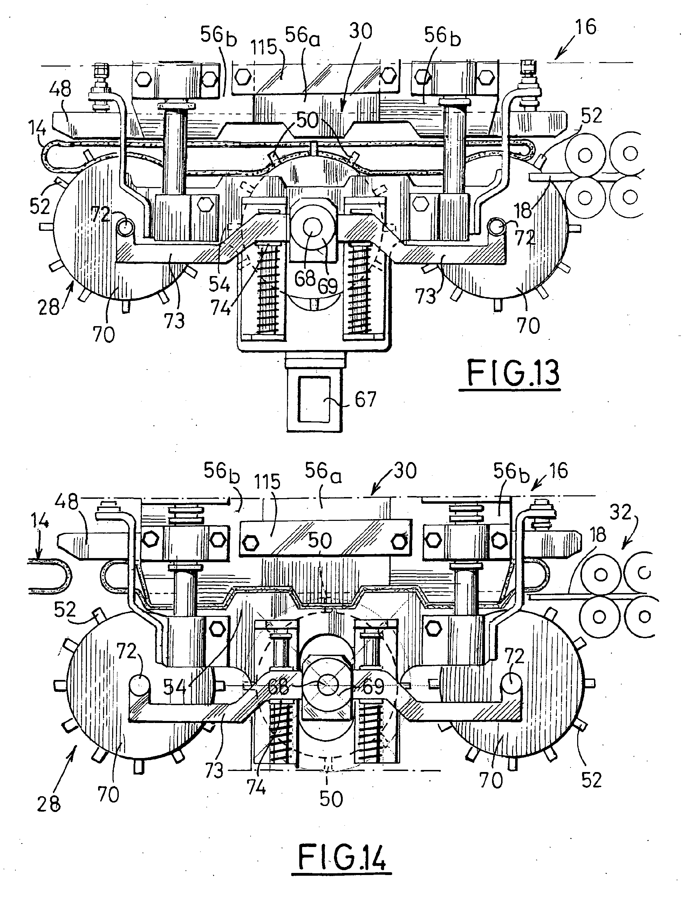

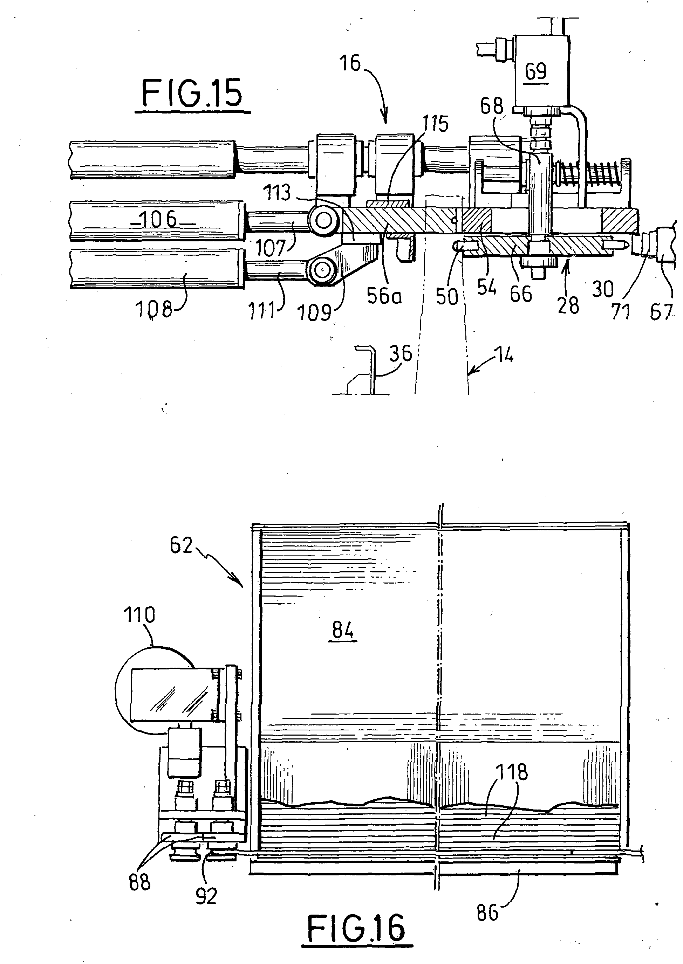

La rotation de la roue centrale 66 est détectée par le codeur 69. Quand la roue 68 a atteint sa position optimale correspondant d'une part à la fin de l'engagement de la poche 14 dans les mors 54, 56a, 56b comme représenté la figure 13, et d'autre part au bon positionnement du pion 50 sur une maille centrale de la poche 14, le codeur 69 émet un signal à l'intention de l'unité de commande. L'unité de commande déclenche alors le blocage de la roue centrale 69 à l'aide d'un dispositif de verrouillage 67 verrouillant un pion 50 de la roue 68 qui est opposé au pion engagé dans les mailles de la poche 14. Ce dispositif 67 comporte par exemple une douille télescopique 71 qui est destinée à recevoir ledit pion 50, comme représenté à la figure 15, ce qui permet d'immobiliser le pion 50 et la roue centrale 68.

Puis, l'unité de commande déclenche l'avancée du vérin central 106, de manière que le mors central 56a avance contre le mors fixe 54. Ceci a pour effet d'immobiliser la poche 14 entre le mors fixe 54 et le mors central mobile 56, tout en comprimant à nouveau les ressorts 76 des coulisseaux 74 qui peuvent alors être à nouveau verrouillés par la butée escamotable en préparation de la poche 14 suivante. La poche 14 se stabilise sur les pions latéraux 52.

L'unité de commande déclenche l'avancée des vérins latéraux 108 et tous les mors 56a, 56b sont serrés par les vérins 106, 108 pour déformer les mailles de la poche 14, comme représenté à la figure 14. Le jonc 18 est alors enfilé, selon sa forme, soit entre les mailles dans le canal d'introduction 65 soit sur le bord supérieur 12 de la poche 14. Les mors 56a, 56b sont alors relâchés par relâchement des vérins 106, 108 et la poche 14 est alors évacuée par le chariot 26 de transfert.

Il convient de remarquer que, en variante, les mors 56a et 56b pourraient être serrés simultanément sans compromettre la stabilité de la poche 14, celle ci étant positionnée préalablement au serrage des mors 56a, 56b par les pions 50 centraux et par les pions 52 latéraux associés.

L'invention permet donc de fermer de façon complètement automatisée des poches maillées destinés à contenir des coquillages tels que par exemple des huîtres, de manière aisée pour l'opérateur, et ce, à des cadences élevées.

## Revendications

1. Unité (10) automatisée destinée à fermer des bord supérieurs (12) de poches (14) maillées destinées à l'élevage de coquillages, notamment des poches maillées pouvant contenir des huîtres, du type qui comporte au moins un poste (16) de fermeture du bord supérieur (12) de chaque poche (14) à l'aide d'un jonc (18),
**caractérisée en ce qu'**elle comporte un châssis (20) d'orientation longitudinale (L) faisant face à un opérateur, qui comporte d'amont en aval :
- un poste (22) de chargement, par lequel les poches maillées (14) sont introduites transversalement,
- une partie amont (24) d'un convoyeur (25) s'étendant sensiblement suivant toute la longueur du châssis (20), qui est destinée à déplacer longitudinalement les poches (14),
- un chariot (26) de transfert, destiné à déplacer les poches (14) une par une jusqu'à un poste (16) de fermeture comportant :
• un dispositif (28) de mise en position de la poche (14),
• un dispositif (30) d'immobilisation de la poche (14),
• un dispositif (32) d'enfilage du jonc (18),
le chariot (26) de transfert étant destiné à évacuer longitudinalement lesdites poches (14) fermées du poste (16) de fermeture,
- une partie aval (34) du convoyeur (25), destinée à évacuer longitudinalement les poches (14).

2. Unité (10) selon la revendication précédente, **caractérisée en ce que** le châssis (20) comporte une surface (36) de guidage des poches (14), comprise dans un plan longitudinal et incliné vers l'arrière d'un angle (α) déterminé par rapport à la verticale et **en ce que** :
- les parties amont et aval (24, 34) du convoyeur (25) comportent chacune des rouleaux horizontaux (38) agencés au pied de la surface (36) de guidage et un moyen d'entraînement (40) logé dans la surface (36) de guidage,
- le chariot (26) de transfert est mobile sensiblement verticalement parallèlement à la surface (36) de guidage,
- le poste (16) de fermeture est agencé dans une partie supérieure de la surface (36) de guidage.

3. Unité (10) selon la revendication précédente, **caractérisée en ce que** le moyen (40) d'entraînement du convoyeur (25) est constitué d'un tapis roulant longitudinal muni d'aubes (41) qui affleure dans la surface (36) de guidage.

4. Unité (10) selon l'une quelconque des revendications précédentes, **caractérisée en ce que** le chariot (26) mobile verticalement comporte une palette (44) munie de rouleaux (46) horizontaux qui est mobile entre une position basse située dans l'alignement des rouleaux (38) des parties amont et aval (24, 34) du convoyeur (25) et une position haute associée à la mise en position du bord supérieur (12) d'une poche (14) au niveau du poste (16) de fermeture.

5. Unité (10) selon l'une quelconque des revendications précédentes, **caractérisée en ce que** le dispositif (26) de mise en position de la poche (14) comporte au moins :
- un guide (64) d'introduction de la poche,
- un pion (50) central mobile d'alignement des mailles, qui est destiné à être introduit transversalement dans un maille centrale du bord supérieur (12) de la poche (14),
- deux pions (52) latéraux de stabilisation de la poche, mobiles longitudinalement et transversalement, qui sont destinés à être introduits transversalement dans des mailles d'extrémité du bord supérieur (12) de la poche (14) après que le pion (50) central ait été introduit, pour stabiliser horizontalement le bord (12) supérieur de la poche (14) en se déplaçant longitudinalement avec les mailles d'extrémité du bord supérieur (12) de la poche (14).

6. Unité (10) selon l'une quelconque des revendications précédentes, **caractérisée en ce que** le dispositif (30) d'immobilisation de la poche (14) comporte un mors fixe (54) et au moins un mors (56a, 56b) opposé, mobile transversalement perpendiculairement à la surface (36) de guidage, qui sont destinés à immobiliser les mailles de la poche (14) pendant l'introduction du jonc (18).

7. Unité (10) selon la revendication précédente prise en combinaison avec la revendication 5, **caractérisée en ce que** le pion central (50) et les pions latéraux (52) sont logés dans le dispositif (30) d'immobilisation de la poche (14), **en ce qu'**ils sont interposés entre d'une part le mors fixe (54) et d'autre part un mors central mobile (56a) et deux mors latéraux mobiles (56b) indépendants du mors central (56a), et **en ce que** chaque pion (50, 52) porté par un mors (56a, 56b) est reçu transversalement au travers des mailles dans un perçage de réception d'un mors (54) opposé.

8. Unité (10) selon l'une des revendications 6 ou 7, **caractérisée en ce qu'**elle est destinée à l'enfilage longitudinal d'un jonc (18) filaire dans une rangée déterminée de mailles alignées de la poche (14) située verticalement sous au moins une rangée de mailles du bord supérieur (12) de la poche (14) et **en ce que** les mors fixe (54) et mobiles (56a, 56b) sont munis de dents trapézoïdales (60, 62) complémentaires espacées transversalement d'une distance (1) longitudinale correspondant à la distance longitudinale séparant trois mailles consécutives de la poche (14), et qui sont destinés, lorsqu'elles sont serrées, à déformer la poche (14) de manière à aligner entre leurs flancs les mailles de la rangée déterminée.

9. Unité (10) selon la revendication précédente, **caractérisée en ce que** le dispositif (32) d'enfilage du jonc (18) filaire comporte :
- à l'extrémité de chaque dent (62), une gouttière (64) d'orientation longitudinale qui est destinée, lors du serrage transversal des mors, à former avec une paroi du mors (54) opposé située entre deux de ses dents (60) consécutives, un conduit d'un diamètre correspondant sensiblement au diamètre du jonc filaire (18) de manière que l'ensemble des conduits alignés détermine un canal (65) d'introduction du jonc (18) filaire agencé verticalement au niveau de la série de mailles déterminée .
- des moyens (62) d'introduction du jonc (18) filaire dans ledit canal (65) d'introduction.

10. Unité (10) selon l'une des revendications 6 ou 7, **caractérisée en ce qu'**elle est destinée à l'enfilage longitudinal à cheval sur le bord supérieur (12) de la poche (14), d'un jonc (18) tubulaire fendu et **en ce que** les mors fixe (54) et mobiles (56a, 56b) sont destinés à pincer le bord supérieur (12) de la poche (14) pour permettre l'introduction du bord supérieur (12) de la poche (14) dans la fente (18) du jonc (14).

11. Unité (10) selon la revendication précédente, **caractérisée en ce que** le dispositif (32) d'enfilage du jonc (18) tubulaire fendu comporte,
- à l'extrémité de chaque mors (54, 56a, 56b), une gouttière d'orientation longitudinale qui est destinée, lors du serrage des mors, à former avec la gouttière du mors opposé un canal d'introduction du jonc fendu (18) agencé verticalement au niveau du bord supérieur (12) de la poche (14).
- des moyens d'introduction (62) du jonc (18) tubulaire fendu dans ledit canal d'introduction.

12. Unité (10) selon l'une des revendications 9 à 11, **caractérisée en ce que** les moyens (62) d'introduction du jonc (18) comportent d'amont en aval:
- une trémie (84) vibrante d'alimentation en joncs (18),
- une gouttière (86) de réception, disposée sous la trémie (84),
- deux paires de galets (88) d'entraînement d'axe transversal, interposés entre la gouttière (86) de réception et le canal (65), qui sont destinés à entraîner le jonc (18) vers le canal (65) d'introduction.
- un vérin (91) longitudinal d'enfilage, opposé aux galets (88), qui destiné à pousser une extrémité (92) du jonc (18) pour provoquer son entraînement par les galets (88).
- un capteur de fin de course opposé aux galets (88) par rapport au canal (65) d'introduction.

13. Unité (10) selon la revendication précédente, prise en combinaison avec la revendication 11, **caractérisée en ce que** les moyens (62) d'introduction du jonc (18) comportent des moyens de mise en rotation du jonc (18) tubulaire fendu autour d'un axe longitudinal dans la gouttière (86) de réception et entre les galets (88), et un doigt vertical (90) inférieur, interposé entre les galets (88) d'entraînement et le canal (65) de réception, qui est destiné à s'insérer dans la fente (78) du jonc (18) lors de la rotation du jonc (18) de manière à tourner la fente (78) du jonc (18) vers le bord supérieur (12) de la poche (14), puis à écarter les bords (79) de la fente du jonc (18) tubulaire fendu lors de son avancée pour permettre aux dits bords (79) de glisser de part et d'autre du bord supérieur (12) de la poche (14).

14. Unité (10) selon la revendication 12 prise en combinaison avec la revendication 9, **caractérisée en ce qu'**elle est destiné à l'enfilage longitudinale d'un jonc (18) filaire de diamètre élevé, et **en ce que** les galets (88) sont fixes et agencés à proximité du canal (65) des mors (54, 56a, 56b).

15. Unité (10) selon la revendication 12 prise en combinaison avec la revendication 9, **caractérisée en ce qu'**elle est destiné à l'enfilage d'un jonc (18) filaire de diamètre réduit et **en ce que** les galets (88) sont solidaires d'une aiguille (92) tubulaire d'un diamètre correspondant au diamètre extérieur du jonc (18) et d'une longueur inférieure à celle du jonc (18), qui est susceptible d'être mue longitudinalement par un vérin (94) à l'intérieur du canal (65) pour favoriser la pénétration du jonc (18) filaire de diamètre réduit dans les mailles.

16. Unité (10) selon la revendication précédente, **caractérisée en ce qu'**elle comporte un moyen (96) de pinçage de la partie (98) du jonc (18) qui fait saillie hors de l'aiguille (92) à l'opposé des galets (88), pour favoriser la rétractation de l'aiguille (94) en maintenant le jonc (18) filaire de diamètre réduit en place dans les mailles.

17. Unité (10) selon l'une quelconque des revendications 7 à 16, **caractérisée en ce que** :
- le pion (50) central mobile d'alignement des mailles est solidaire de l'extrémité d'une dent (62) centrale du mors central (56a) mobile de manière à être mû par ledit mors (56a) central mobile,
- les deux pions (52) latéraux de stabilisation sont montés sur des chariots (64) montés coulissants longitudinalement par rapport aux mors (56b) latéraux mobiles.

18. Unité (10) selon l'une quelconque des revendications 7 à 16, **caractérisée en ce que** :
- une pluralité de pions (50) centraux d'alignement sont portés par une roue (66) centrale d'axe (68) vertical qui est décalée verticalement par rapport au mors fixe (54) et dont l'axe (68) blocable est mobile transversalement à l'encontre du mouvement du mors central (56a) et est relié à un codeur (69) pour déterminer la position de pénétration d'un pion (50) central d'alignement de ladite roue centrale (66) dans la maille,
- une pluralité de pions (52) latéraux de stabilisation sont portés par des roues (70) folles d'axes (72) verticaux qui sont décalées verticalement par rapport au mors fixe (54) et dont les axes (72) sont mobiles transversalement à l'encontre du mouvement du mors (56a) central,
et **en ce que** l'axe (68) de la roue (66) centrale et les axes (72) des roues (70) latérales sont liés à au moins un coulisseau (74), qui est rappelé élastiquement par un ressort (76) à l'encontre du mouvement du mors central (56a), qui est susceptible d'être déverrouillé pour provoquer l'avancée des roues (66, 70) porteuses des pions (50, 52) d'alignement et de stabilisation avant le serrage des mors (56a, 56b), puis qui est susceptible d'être verrouillé après le serrage des mors (56a, 56b) pour recomprimer le ressort (76).

19. Unité (10) selon les revendications précédentes, **caractérisée en ce qu'**elle comporte une unité électronique de commande qui est susceptible de recevoir des informations en provenance au moins de :
- un premier capteur de détection de la position de chaque poche (14) dans le chariot (26) de transfert,
- un deuxième capteur de fin de course de chaque poche (14) dans le dispositif (30) de mise en position de la poche,
- un troisième capteur de course associé aux galets (88) d'entraînement du jonc (18),
pour commander :
- un moteur (102) d'entraînement du tapis roulant longitudinal du convoyeur (25),
- un vérin (104) hydraulique de levage du chariot (26) de transfert,
- un vérin (106) d'actionnement du mors (56a) central mobile,
- au moins un vérin (108) d'actionnement des mors (56b) latéraux mobiles,
- le vérin (91) longitudinal d'enfilage,
- un moteur (110) des galets (88) d'entraînement.

20. Unité (10) selon la revendication précédente prise en combinaison avec les revendications 15 et 16, **caractérisée en ce que** l'unité électronique de commande est susceptible de commander le vérin (94) solidaire de l'aiguille (92) puis les moyens (96) de pincement du jonc (18) filaire de diamètre réduit.

21. Unité (10) selon la revendication 19 prise en combinaison avec la revendication 18, **caractérisée en ce que** l'unité électronique de commande est susceptible de commander le blocage de la roue (66) porteuse des pions centraux (50) en réponse aux informations fournies par le codeur (69) de ladite roue.

22. Procédé de commande d'une unité électronique de commande selon la revendication 20, **caractérisé en ce qu'**il comporte au moins, successivement :
- une étape de marche du convoyeur (25),
- une étape d'arrêt du convoyeur (25),
- une étape de levage du chariot (26) de transfert,
- une étape d'actionnement du poste (16) de fermeture,
- une étape de descente du chariot (26) de transfert,
- une étape de marche du convoyeur (25).

23. Procédé de commande d'une unité électronique de commande selon la revendication 20, **caractérisé en ce qu'**il comporte au moins, successivement :
- une étape de marche du convoyeur (25),
- une étape de levage du chariot (26) de transfert,
- une étape d'arrêt du convoyeur (25),
- une étape d'actionnement du poste (16) de fermeture,
- une étape de marche du convoyeur (25),
- une étape de descente du chariot (26) de transfert.
